# EUROPÄISCHE PATENTSCHRIFT

(11) **EP 2 354 518 B1**
(45) Veröffentlichungstag und Bekanntmachung des Hinweises auf die Patenterteilung: **05.11.2014**
(21) Anmeldenummer: 11000944.6
(22) Anmeldetag: 07.02.2011
(51) Int. Cl.: F02K 9/64, B21D 39/03, B23P 15/00, F02K 9/97

(54) **Verfahren zur Herstellung einer regenerativ gekühlten Düsenerweiterung einer Raketenbrennkammer und Düsenerweiterung**
Method of manufacturing a regeneratively cooled divergent nozzle of a rocket combustion chamber and nozzle
Procédé de fabrication d'une tuyère divergente à refroidissement régénératif d'une chambre de combustion de moteur-fusée et tuyère

(30) Priorität: 08.02.2010 DE 102010007272
(43) Veröffentlichungstag der Anmeldung: 10.08.2011
(73) Patentinhaber: Airbus DS GmbH, 82024 Taufkirchen (DE)
(72) Erfinder: Mäding, Chris, Udo, 85716 Unterschleißheim (DE)

(56) Entgegenhaltungen:
- WO-A1-00/32920
- FR-A1- 2 774 432
- FR-A2- 2 311 608
- US-A- 3 613 207
- US-A1- 2007 259 192
- US-B1- 6 998 570

## Beschreibung

Die Erfindung betrifft ein Verfahren zur Herstellung einer regenerativ gekühlten Düsenerweiterung einer Raketenbrennkammer, die eine erste Wand und eine zweite Wand umfasst, die koaxial zueinander angeordnet sind und zwischen denen eine Anzahl an Kühlkanälen ausgebildet ist. Die Kühlkanäle sind durch Kühlkanalstege seitlich begrenzt. Bei dem Verfahren werden die erste und die zweite Wand durch einen Formschluss miteinander verbunden, indem Kühlkanalstege der ersten Wand in korrespondierende Vertiefungen der zweiten Wand zur Ausbildung des Formschlusses eingreifen.

Die Erfindung betrifft ferner eine regenerativ gekühlte Düsenerweiterung für eine Raketenbrennkammer, die eine erste Wand und eine zweite Wand umfasst, die koaxial zueinander angeordnet sind und zwischen denen eine Anzahl an Kühlkanälen ausgebildet ist. Die Kühlkanäle sind durch Kühlkanalstege seitlich begrenzt. Bei der Düsenerweiterung sind die erste und die zweite Wand durch einen Formschluss miteinander verbunden, wobei Kühlkanalstege der ersten Wand in korrespondierende Vertiefungen der zweiten Wand zur Ausbildung des Formschlusses eingreifen.

Düsenerweiterungen von Raketenbrennkammern stellen thermisch hoch belastete Bauteile dar. Zur Verringerung der thermischen Belastung werden die Düsenerweiterungen gekühlt. Dies erfolgt in erster Linie durch die Einbringung von Kühlkanälen, durch welche wenigstens eine Treibstoffkomponente strömt, um der Wandung der Düsenerweiterung Wärme zu entziehen. Die aufgeheizte Treibstoffkomponente oder -komponenten wird bzw. werden am Austritt aus den Kühlkanälen dem Antriebssystem zur endgültigen Reaktion in der Raketenbrennkammer zugeführt. Alternativ kann bzw. können die Treibstoffkomponenten über separate Systeme ausgestoßen werden, um einen Schub zu erzeugen.

Aus dem Stand der Technik sind verschiedene Verfahren zur Herstellung von regenerativ gekühlten Düsenerweiterungen mit Kühlkanälen bekannt.

Die US 6,467,253 B1 offenbart ein Verfahren, bei dem Segmente der Düsenerweiterung, die jeweils aus einer Innen- und einer Außenwand bestehen, durch einen Formschluss miteinander verbunden werden, indem Kühlkanalstege der Innenwand in korrespondierende Vertiefungen der Außenwand zur Ausbildung des Formschlusses eingreifen. Mehrere dieser Segmente werden über eine Schweißverbindung zu einer rotationssymmetrisch ausgebildeten Düsenerweiterung miteinander verbunden. Konstruktiv bedingt weisen die Kühlkanäle hierbei einen geringen Querschnitt auf, wodurch das Kühlvermögen begrenzt ist.

Die US 6,789,316 B2 offenbart ein Verfahren, bei dem Y-förmige Profilelemente unter Ausbildung entsprechender Kühlkanäle miteinander verschweißt werden. Eine Düsenerweiterung muss hierzu aus einer Vielzahl solcher Profilelemente hergestellt werden, wodurch das Herstellungsverfahren aufwändig ist.

In der US 2006/0213182 A1 wird vorgeschlagen, eine Kühlkanalstege aufweisende Innenwand und eine, an ihrer Innenseite glatte, Außenwand übereinander anzuordnen und durch Hartlöten miteinander zu verbinden.

Ein weiteres Verfahren nach dem Stand der Technik ist aus US 6998570 bekannt.

Fertigungsverfahren unter Verwendung von Löt- und Schweißverbindungen sind durch einen sehr hohen produktionstechnischen Aufwand gekennzeichnet.

Es ist deshalb Aufgabe der vorliegenden Erfindung, ein Verfahren anzugeben, mit dem eine regenerativ gekühlte Düsenerweiterung einer Raketenbrennkammer auf einfachere Weise hergestellt werden kann, wobei die hieraus resultierende regenerativ gekühlte Düsenerweiterung eine hohe Kühleffizienz aufweisen soll. Es ist weiterhin Aufgabe der vorliegenden Erfindung, eine regenerativ gekühlte Düsenerweiterung anzugeben, welche auf einfache Weise herstellbar ist und eine hohe Kühleffizienz aufweist.

Diese Aufgaben werden gelöst durch ein Verfahren gemäß den Merkmalen des Patenanspruchs 1 sowie eine Düsenerweiterung gemäß den Merkmalen des Patentanspruchs 13. Vorteilhafte Ausgestaltungen ergeben sich aus den abhängigen Patentansprüchen.

Die Erfindung schafft ein Verfahren zur Herstellung einer regenerativ gekühlten Düsenerweiterung einer Raketenbrennkammer, die eine erste und eine zweite Wand umfasst, die koaxial zueinander angeordnet sind und zwischen denen eine Anzahl an Kühlkanälen ausgebildet ist, die durch Kühlkanalstege seitlich begrenzt sind. Die erste und die zweite Wand werden durch einen Formschluss miteinander verbunden, indem Kühlkanalstege der ersten Wand in korrespondierende Vertiefungen der zweiten Wand zur Ausbildung des Formschlusses eingreifen. Erfindungsgemäß wird der Formschluss durch eine Umformung der die Vertiefungen aufweisenden zweiten Wand im Bereich der Kühlkanäle hergestellt.

Das erfindungsgemäße Verfahren ermöglicht die einfache Herstellung einer regenerativ gekühlten Düsenerweiterung, da diese im Wesentlichen mit mechanischen Verarbeitungsschritten hergestellt werden kann. Durch den prinzipiell möglichen Verzicht auf die Verwendung von Löt- und Schweißverfahren kann der produktionstechnische Aufwand zur Herstellung der regenerativ gekühlten Düsenerweiterung gering gehalten werden, wodurch auch die Kosten zur Herstellung der Düsenerweiterung im Vergleich kleiner sind.

Zweckmäßigerweise erfolgt die Umformung der zweiten Wand von einer der ersten Wand gegenüber liegenden Seite her. Auf diese Weise kann die Herstellung des Formschlusses einfach und schnell erfolgen.

Um eine schnelle und effiziente Fertigung der Düsenerweiterung realisieren zu können, kann vorgesehen sein, dass die Umformung im Bereich eines Kühlkanals oder gleichzeitig im Bereich mehrerer Kühlkanäle erfolgt. Zur Herstellung der vollständigen Düsenerweiterung wird der Formschluss dann im Bereich eines oder mehrerer der Kühlkanäle versetzt in mehreren sequentiellen Verfahrensschritten erzeugt.

Die zur Umformung der zweiten Wand notwendige Kraft kann gemäß einer Ausgestaltungsvariante durch eine oder durch mehrere neben- und/oder hintereinander angeordnete Laufrollen aufgebracht werden. Durch mehrere nebeneinander angeordnete Laufrollen kann die gleichzeitige Umformung mehrerer Kühlkanäle realisiert werden, wodurch sich eine beschleunigte Fertigung ergibt. Grundsätzlich kann die Umformung auch mit anderen, geeigneten Werkzeugen erfolgen.

Alternativ oder zusätzlich kann zur Umformung der zweiten Wand Überdruck und/oder Unterdruck eingesetzt werden. Die Umformung ist beispielsweise durch die Schaffung eines Unterdrucks im Bereich der Kühlkanäle bei gleichzeitigem Überdruck auf die zweite Wand realisierbar.

Es ist weiterhin vorgesehen, dass die erste und die zweite Wand vor dem Schritt des Umformens als Ganzes in axialer Richtung derart übereinander positioniert werden, dass von der ersten Wand entfernte Enden zumindest mancher der Kühlkanalstege in die Vertiefungen ragen. Zur Herstellung des Formschlusses ist dann lediglich die Umformung der die Vertiefung aufweisenden zweiten Wand im Bereich der Kühlkanäle notwendig. "Als Ganzes" bedeutet, dass nicht lediglich einzelne Segmente übereinander positioniert werden, sondern die bereits parabolisch ausgebildete erste und zweite Wand übereinander angeordnet werden.

In einer ersten Alternative erfolgt die Umformung im Bereich zwischen zwei unmittelbar benachbarten Kühlkanalstegen. In einer anderen Alternative erfolgt die Umformung im Bereich eines oder mehrerer benachbarter Kühlkanalstege derart, dass die zweite Wand mit dem von der ersten Wand entfernten Ende eines oder mehrerer Kühlkanalstege in Anlage gebracht wird, ohne einen Formschluss herzustellen, wobei der Formschluss zwischen der ersten und der zweiten Wand zumindest durch die jeweils zu diesen Kühlkanalstegen benachbarten Kühlkanalstege erfolgt. Hierdurch ist ein einfacheres und schnelleres Fertigen der Düsenerweiterung möglich, da eine geringere Anzahl an Umformschritten zur Herstellung der vollständigen Düsenerweiterung notwendig ist. Darüber hinaus kann durch diese Ausgestaltungsvariante die Gestalt der Kühlkanäle in gewünschter Weise variiert werden.

Zweckmäßigerweise erfolgt die Umformung derart, dass jeder n-te Kühlkanalsteg formschlüssig mit der zweiten Wand verbunden wird, wobei n größer als 2 ist. Beispielsweise kann das Umformen der zweiten Wand derart erfolgen, dass nur jeder zweite oder dritte Kühlkanalsteg für die Ausbildung der formschlüssigen Verbindung verwendet wird. Dies bedeutet, zwischen den für die Umformung vorgesehenen Kühlkanalstegen werden auf die erste Wand zusätzliche, kürzere Kühlkanalstege eingebracht, deren Höhe unter Berücksichtigung der notwendigen Verformung und Strömungsbedingungen bestimmt wird.

Zur Versteifung der regenerativ gekühlten Düsenerweiterung kann weiter vorgesehen sein, dass zumindest ein Versteifungsring vorgegebener axialer Länge in Anlage zu der zweiten Wand der Düsenerweiterung gebracht wird, so dass dieser in einer Ebene liegt, die orthogonal zu einer Rotationsachse der Düsenerweiterung ist. Ein jeweiliger Versteifungsring erhöht die Steifigkeit der Düsenerweiterung, insbesondere im Bereich der durch die Umformung geänderten Geometrie. Je nach Ausgestaltung der axialen Länge eines jeweiligen Versteifungsrings (bis hin zu einer Monolithaußenschürze, welche vergleichbar mit der Länge der Düsenerweiterung oder einzelner Abschnitte sein kann) kann die Steifigkeit der Düsenerweiterung maximal beeinflusst werden.

Der zumindest eine Versteifungsring kann im Bereich jeweiliger Umformungen einen an deren Gestalt angepassten Vorsprung aufweisen, wodurch die Form der zweiten Wand im Bereich der Kühlkanäle bei anliegendem Innendruck (aufgrund eines durch die Kühlkanäle strömenden Kühlmediums) erhöht wird.

Die Erfindung schafft weiter eine regenerativ gekühlte Düsenerweiterung für eine Raketenbrennkammer, die eine erste Wand und eine zweite Wand umfasst, die koaxial zueinander angeordnet sind und zwischen denen eine Anzahl an Kühlkanälen ausgebildet ist, die durch Kühlkanalstege seitlich begrenzt sind. Bei der Düsenerweiterung sind die erste und zweite Wand durch einen Formschluss miteinander verbunden, wobei Kühlkanalstege der ersten Wand in korrespondierende Vertiefungen der zweiten Wand zur Ausbildung des Formschlusses eingreifen. Erfindungsgemäß ist im Bereich eines jeweiligen Formschlusses die Vertiefungen aufweisende, zweite Wand im Bereich der Kühlkanäle umgeformt.

Die erfindungsgemäße regenerativ gekühlte Düsenerweiterung ist auf einfache und kostengünstige Weise herstellbar, wobei eine hinreichende Kühleffizienz aufgrund des eingesetzten Verbindungsverfahrens gewährleistet ist.

Es ist zweckmäßigerweise vorgesehen, dass die erste und die zweite Wand jeweils eine rotationssymmetrische, insbesondere parabolische, Ausgangskontur aufweisen.

In einer weiteren zweckmäßigen Ausgestaltung ist vorgesehen, dass jeder n-te Kühlkanalsteg formschlüssig mit der zweiten Wand verbunden ist, wobei n größer als 2 ist. Gemäß einer weiteren Ausgestaltung ist ein Versteifungsring vorgegebener axialer Länge in Anlage zu der zweiten Wand der Düsenerweiterung gebracht, so dass dieser in einer Ebene liegt, die orthogonal zu einer Rotationsachse der Düsenerweiterung ist.

Die Erfindung wird nachfolgend näher anhand von Ausführungsbeispielen erläutert. Es zeigen:
- Fig. 1: eine erfindungsgemäße Düsenerweiterung in einer auseinandergezogenen, perspektivischen Darstellung,
- Fig. 2: einen vergrößerten, perspektivischen Ausschnitt einer erfindungsgemäß hergestellten Düsenerweiterung gemäß einer ersten Variante, bei dem eine Umformung im Bereich eines Kühlkanals vorgenommen ist,
- Fig. 3: den in Fig. 2 dargestellten Ausschnitt, an dem die Herstellung der Umformung verdeutlicht wird,
- Fig.4: einen vergrößerten, perspektivischen Ausschnitt einer erfindungsgemäß hergestellten Düsenerweiterung gemäß einer zweiten Ausführungsvariante, bei dem eine Umformung im Bereich mehrerer Kühlkanäle vorgenommen ist,
- Fig. 5: einen vergrößerten, perspektivischen Ausschnitt einer erfindungsgemäß hergestellten Düsenerweiterung gemäß der zweiten Ausführungsvariante, und
- Fig. 6: einen vergrößerten, perspektivischen Ausschnitt einer erfindungsgemäß hergestellten Düsenerweiterung gemäß einer dritten Ausführungsvariante, bei dem eine Umformung im Bereich variierender Kühlkanalanzahlen vorgenommen ist.

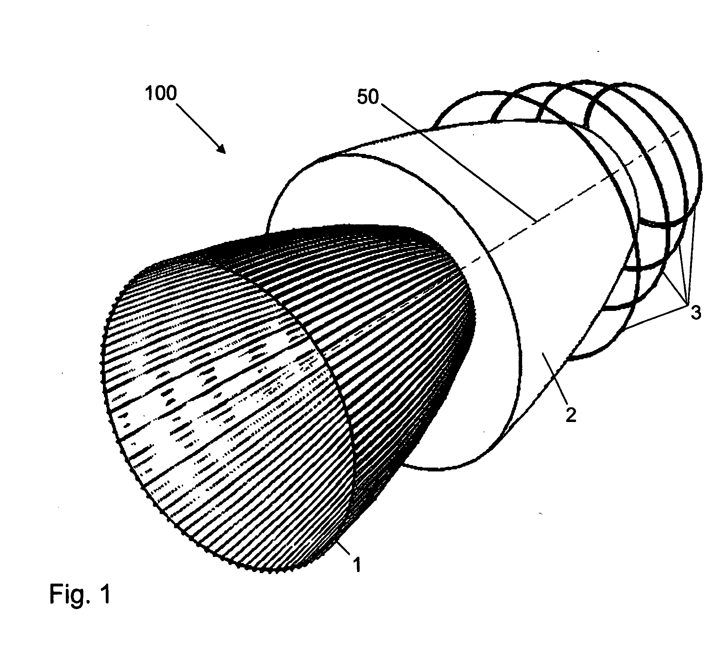

Fig. 1 zeigt in einer perspektivischen, auseinander gezogenen Darstellung die zur Herstellung einer regenerativ gekühlten Düsenerweiterung 100 notwendigen Komponenten. Mit 1 ist eine parabolisch ausgebildete erste Wand, die nachfolgend als Innenliner bezeichnet wird, gekennzeichnet. Das Bezugszeichen 2 kennzeichnet eine zweite Wand, die nachfolgend als Deckmantel bezeichnet wird. Mit dem Bezugszeichen 3 sind beispielhaft vier Versteifungsringe 3 gekennzeichnet, welche zur Erhöhung der Steifigkeit der Düsenerweiterung optional vorgesehen werden können. Zur Herstellung der Düsenerweiterung werden zunächst der Innenliner 1 und der Deckmantel 2 übereinander angeordnet, wobei zumindest der Deckmantel 2 zunächst eine glatte Oberflächenkontur aufweist.

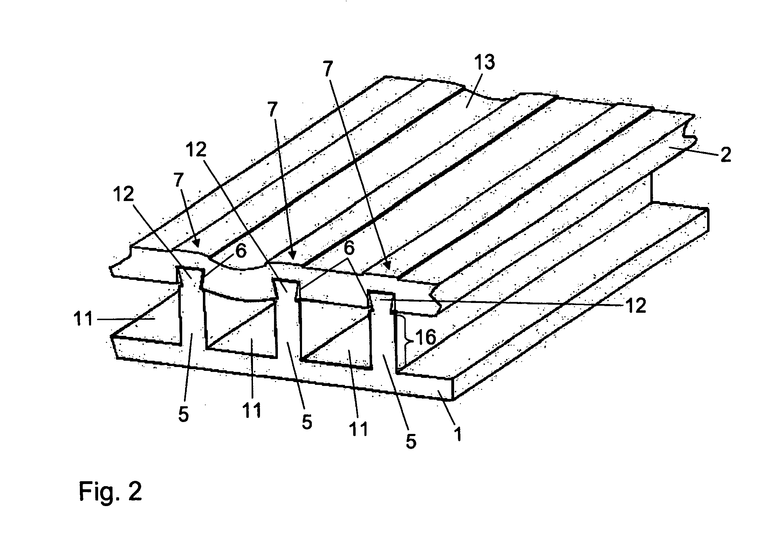

Wie aus den vergrößerten Ausschnitten der Figuren 2 bis 6 besser zu erkennen ist, weist der Innenliner 1 eine Anzahl an sich in Richtung einer Rotationsachse 50 (vgl. Fig. 1) erstreckender Kühlkanalstege 5 oder Kühlkanalstege 5 und 10 auf. Die Kühlkanalstege 5 bzw. 5 und 10 sind einstückig mit dem Innenliner 1 ausgebildet, d.h. bilden eine Einheit mit diesem. Zwischen jeweiligen Kanalstegen 5 bzw. 5 und 10 sind Kühlkanäle 11 ausgebildet, die durch die jeweiligen Kühlkanalstege seitlich begrenzt sind.

Die Kühlkanalstege 5 unterscheiden sich von den Kühlkanalstegen 10 in ihrer radialen Länge und in der Ausgestaltung ihrer Enden. Während die vom Innenliner 1 abgewandten Enden 12 der Kühlkanalstege 5 nach Art eines Schwalbenschwanzes ausgebildet sind, der sich von einer Einschnürung zum Ende hin erweitert, sind die vom Innenliner 1 abgewandten Enden 15 der Kühlkanalstege 10 kürzer. Darüber hinaus weisen die Enden 15 der Kühlkanalstege 10 keine besondere Querschnittsgestalt auf.

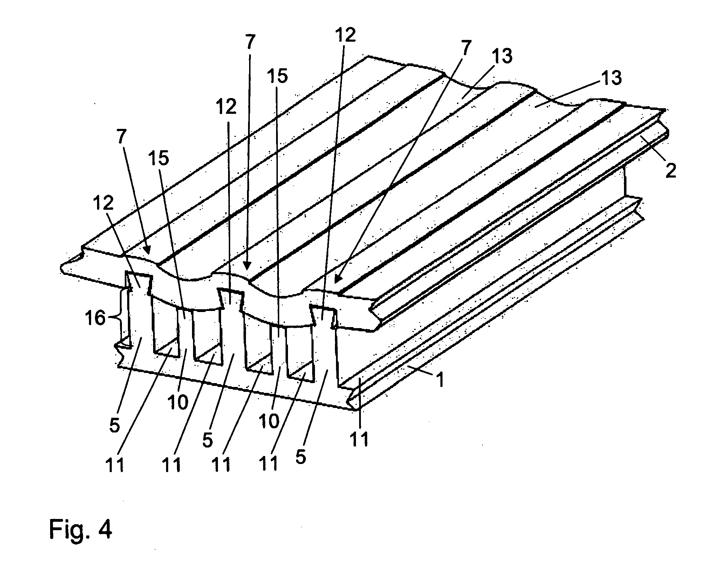

In Größe und Anordnung korrespondierend zu den Kühlkanalstegen 5 bzw. deren Enden 12 weist der Deckmantel 2 Vertiefungen 6 auf. Die Vertiefungen 6 erstrecken sich analog zum Verlauf der Kühlkanalstege 5 in Richtung der Rotationsachse 50. Die Vertiefungen 6 des Deckmantels 2 weisen einen zunächst rechteckigen Querschnitt auf, so dass sie bei Übereinanderanordnung von Innenliner 1 und Deckmantel 2 die schwalbenschwanzförmigen Enden 12 der Kühlkanalstege 5 aufnehmen. Das äußerste Ende der schwalbenschwanzförmigen Enden 12 ist dabei an die Breite der Vertiefungen 6 angepasst. Die Gesamthöhe der Kühlkanalstege 10 - sofern vorhanden - ist dabei etwas geringer als ein jeweiliger Sockel 16 der Kühlkanalstege 5, an den sich die schwalbenschwanzförmigen Enden 12 anschließen (vgl. Fig. 2, die ein Ausführungsbeispiel ohne Kühlkanalstege 10, und Fig. 4, die ein Ausführungsbeispiel mit Kühlkanalstegen 5 und 10 zeigt). Die Höhe der Sockel 16 bzw. der Kühlkanalstege 10 bemisst sich nach der notwendigen Höhe der Kühlkanäle 11 und eines erforderlichen Strömungsquerschnitts.

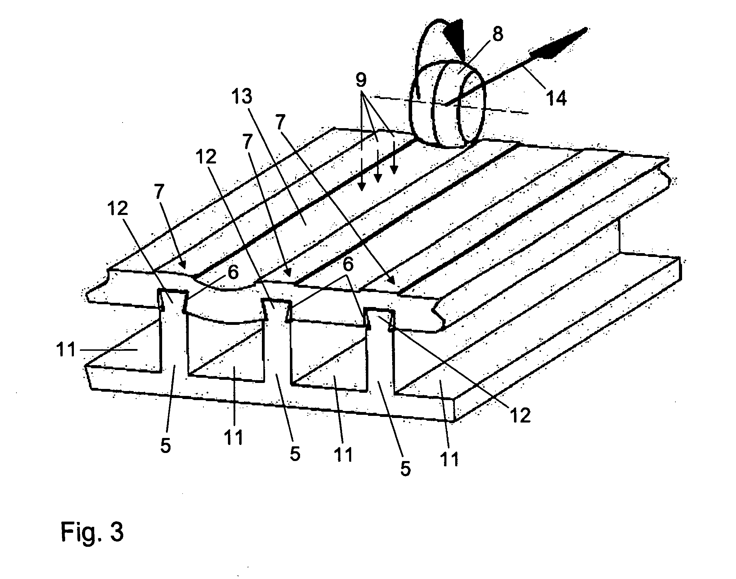

In den Figuren 2 und 3 ist eine erste Ausführungsvariante einer erfindungsgemäß hergestellten Düsenerweiterung dargestellt, welche lediglich Kühlkanalstege 5 mit endseitig angeordneten schwalbenschwanzförmigen Enden 12 aufweist. Durch entsprechende Verformungsarbeit des Deckmantels 2 im Bereich zwischen jeweils zwei der Kühlkanalstege 5 erfolgt die Ausbildung eines Formschlusses 7 (formschlüssige Verbindung) im Endbereich 12 der Kühlkanalstege 5 zwischen dem Innenliner 1 und dem Deckmantel 2. Durch die Umformung, die beispielsweise durch eine Laufrolle 8 unter Aufbringung einer Kraft 9 erfolgen kann, wird die Querschnittsgestalt der Vertiefungen 6 derart verändert, dass sich die Wandungen der Vertiefung 6 an das schwalbenschwanzförmige Ende 12 der benachbarten Kühlkanalstege 5 anschmiegt. Die Umformung kann durch Bewegung der Laufrolle 8 in der mit dem Pfeil 14 gekennzeichneten Richtung erfolgen (vgl. Fig. 3).

Die Herstellung des Formschlusses erfolgt beispielsweise in mehreren Schritten versetzt über einen oder gleichzeitig mehrere, benachbarte Kühlkanäle 11, wodurch eine Verzerrung der Innenkontur weitestgehend vermieden werden kann. Durch die Laufrolle oder Laufrollen 8 wird die zur Umformung des Deckmantels 2 notwendige Kraft aufgebracht. Im Ergebnis weist der Deckmantel 2 im Bereich jeweiliger umgeformter Kühlkanäle 11 eine in Richtung des Innenliners 1 gerichtete Wölbung (Umformung 13) auf, die durch die Umformung erzielt ist.

Die Ausführungsbeispiele in den Figuren 4, 5 und 6 weisen zwischen jeweils zwei Kühlkanalstegen 5 einen der kürzeren Kühlkanalstege 10 auf. Die Umformung des Deckmantels 2 erfolgt bei dieser Variante derart, dass nur jeder zweite Kühlkanalsteg 5 für die Ausbildung einer formschlüssigen Verbindung 7 verwendet wird. Dies bedeutet, zwischen den für den Formschluss vorgesehenen Kanalstegen 5 sind auf den Innenliner 1 zusätzliche kürzere Kühlkanalstege 10 eingebracht, deren Höhe unter Berücksichtigung der notwendigen Verformung des Deckmantels 2 und Strömungsbedingungen bestimmt wird. Bei der Durchführung der Umformung im Bereich zwischen zweien der Kühlkanalstege 5 ist die durch die Laufrolle 8 oder Laufrollen 8 herbeigeführte Kraft 9 derart, dass der Deckmantel 2 auf den Enden 15 der Kühlkanalstege 10 zum Liegen kommt.

In Abwandlung von den in den Figuren gezeigten Ausführungsbeispielen könnten zwischen jeweils zwei Kühlkanalstegen 5 auch mehr als einer der kürzeren Kühlkanalstege 10 angeordnet sein. So könnte beispielsweise jeder dritte der Kühlkanalstege 5, 10 zur Herstellung eines Formschlusses verwendet werden.

Durch die Verformung des Deckmantels 2, welcher - wie der Innenliner 1 - eine parabelförmige, rotationssymmetrische Ausgangskontur hat, erhöht sich die Steifigkeit der Düsenerweiterung 100.

Um die Steifigkeit der Düsenerweiterung weiter zu erhöhen, können die eingangs in Verbindung mit Fig. 1 bereits erwähnten Versteifungsringe 3 vorgesehen werden. Diese erhöhen die Steifigkeit insbesondere im Bereich der durch die Umformung geänderten Geometrie. Durch eine entsprechende Änderung der Breite der Versteifungsringe 3 bis hin zu einer Monolithaußenschürze, welche vergleichbar mit der Länge der Düsenerweiterung oder einzelner Abschnitte sein kann, kann die Steifigkeit der Düsenerweiterung maximal optimiert werden.

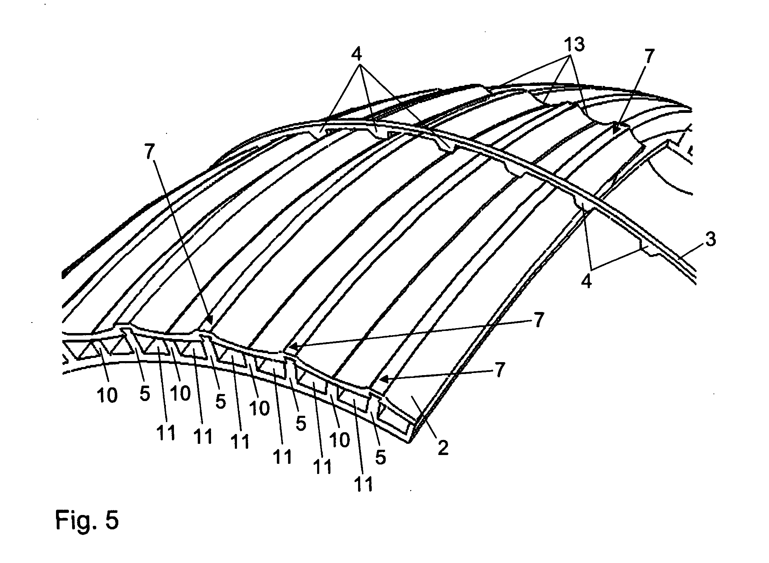

Die Versteifungsringe 3 können auch in der dem Deckmantel 2 zugewandten Seite mit Innenrippen 4 versehen werden, wodurch die Form des Deckmantels 2 im Bereich der Kanäle bei anliegendem Innendruck erhöht wird. Die geht exemplarisch aus der Fig. 5 hervor, wobei die Innenrippen 4 eine an die Kontur der Verformung des Deckmantels 2 angepasste Gestalt aufweisen.

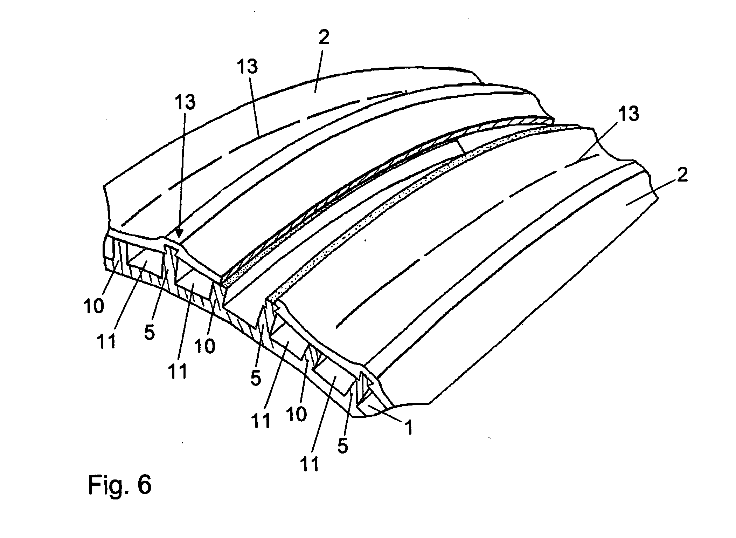

Durch die selektive Verwendung von Kühlkanalstegen zur Anbindung des Deckmantels 2 an den Innenliner 1 über die für den Formschluss vorgesehenen Kühlkanalstege 5 bietet sich ferner die Möglichkeit, Düsenerweiterungen mit variabler Kühlkanalsteganzahl zu verwenden. Fig. 6 zeigt eine mögliche Konfiguration einer Düsenerweiterung mit variabler Kühlkanalsteganzahl. Im unteren Bereich erfolgt die Anbindung zwischen dem Innenliner 1 und dem Deckmantel 2 über jeden zweiten Kühlkanalsteg 5. Im oberen, vom Betrachter abgewandten Bereich wird aufgrund der geringeren Anzahl der Kühlkanalstege jeder der Kühlkanalstege für die Anbindung des Deckmantels 2 an den Innenliner 1 genutzt.

### Bezugszeichenliste

- 1: Innenliner
- 2: Deckmantel
- 3: Versteifungsring
- 4: Innenrippe
- 5: Kühlkanalsteg
- 6: Vertiefung (des Deckmantels)
- 7: Formschluss
- 8: Laufrolle
- 9: Kraft
- 10: Kühlkanalsteg
- 11: Kühlkanal
- 12: Ende des Kühlkanalstegs 5
- 13: Umformung
- 14: Bewegungsrichtung der Laufrolle 8
- 15: Ende des Kühlkanalstegs 10
- 16: Sockel
- 50: Rotationsachse
- 100: Düsenerweiterung

## Patentansprüche

1. Verfahren zur Herstellung einer regenerativ gekühlten Düsenerweiterung einer Raketenbrennkammer, die eine erste Wand (1) und eine zweite Wand (2) umfasst, die koaxial zueinander angeordnet sind und zwischen denen eine Anzahl an Kühlkanälen (11) ausgebildet ist, die durch Kühlkanalstege (5, 10) seitlich begrenzt sind, bei dem die erste und die zweite Wand (1, 2) durch einen Formschluss (7) miteinander verbunden werden, indem Kühlkanalstege (5, 10) der ersten Wand (1) in korrespondierende Vertiefungen (6) der zweiten Wand (2) zur Ausbildung des Formschlusses (7) eingreifen,
**dadurch gekennzeichnet, dass**
der Formschluss (7) durch eine Umformung der die Vertiefungen aufweisenden, zweiten Wand (2) im Bereich der Kühlkanäle (11) hergestellt wird.

2. Verfahren nach Anspruch 1, **dadurch gekennzeichnet, dass** eine Umformung der zweiten Wand (2) von einer der ersten Wand (1) gegenüberliegenden Seite her erfolgt.

3. Verfahren nach Anspruch 1 oder 2, **dadurch gekennzeichnet, dass** die Umformung im Bereich eines Kühlkanals oder gleichzeitig im Bereich mehrerer Kühlkanäle (11) erfolgt.

4. Verfahren nach Anspruch 3, **dadurch gekennzeichnet, dass** zur Herstellung der vollständigen Düsenerweiterung der Formschluss (7) im Bereich eines oder mehrerer Kühlkanäle (11) versetzt in mehreren sequentiellen Verfahrensschritten erzeugt wird.

5. Verfahren nach einem der vorhergehenden Ansprüche, **dadurch gekennzeichnet, dass** die zur Umformung der zweiten Wand (2) notwendige Kraft (9) durch eine oder mehrere neben- und/oder übereinander angeordnete Laufrollen (8) aufgebracht wird.

6. Verfahren nach einem der vorhergehenden Ansprüche, **dadurch gekennzeichnet, dass** zur Umformung der zweiten Wand (2) Überdruck und/oder Unterdruck eingesetzt wird.

7. Verfahren nach einem der vorhergehenden Ansprüche, **dadurch gekennzeichnet, dass** die erste und die zweite Wand (1, 2) vor dem Schritt des Umformens als Ganzes in axialer Richtung derart übereinander positioniert werden, dass von der ersten Wand (1) entfernte Enden (12) zumindest mancher der Kühlkanalstege (5) in die Vertiefungen (6) ragen.

8. Verfahren nach einem der Ansprüche 1 bis 7, **dadurch gekennzeichnet, dass** die Umformung im Bereich zwischen zwei unmittelbar benachbarten Kühlkanalstegen (5, 10) erfolgt.

9. Verfahren nach einem der Ansprüche 1 bis 7, **dadurch gekennzeichnet, dass** die Umformung im Bereich eines oder mehrerer benachbarter Kühlkanalstege (10) derart erfolgt, dass die zweite Wand (2) mit dem von der ersten Wand (1) entfernten Ende (15) eines oder mehrerer Kühlkanalstege (10) in Anlage gebracht wird ohne einen Formschluss herzustellen, wobei der Formschluss (7) zwischen der ersten und der zweiten Wand (1, 2) zumindest durch die jeweils zu diesen Kühlkanalstegen (10) benachbarten Kühlkanalstege (5) erfolgt.

10. Verfahren nach Anspruch 9, **dadurch gekennzeichnet, dass** die Umformung derart erfolgt, dass jeder n-te Kühlkanalsteg (5) formschlüssig mit der zweiten Wand (2) verbunden wird, wobei n größer als 2 ist.

11. Verfahren nach einem der vorhergehenden Ansprüche, **dadurch gekennzeichnet, dass** zumindest ein Versteifungsring (3) vorgegebener axialer Länge in Anlage zu der zweiten Wand (2) der Düsenerweiterung gebracht wird, so dass dieser in einer Ebene liegt, die orthogonal zu einer Rotationsachse der Düsenerweiterung ist.

12. Verfahren nach Anspruch 11, **dadurch gekennzeichnet, dass** der zumindest eine Versteifungsring (3) im Bereich jeweiliger Umformungen einen an deren Gestalt angepassten Vorsprung (4) aufweist.

13. Regenerativ gekühlte Düsenervveiterung für eine Raketenbrennkammer, die eine erste Wand (1) und eine zweite Wand (2) umfasst, die koaxial zueinander angeordnet sind und zwischen denen eine Anzahl an Kühlkanälen (11) ausgebildet ist, die durch Kühlkanalstege (5, 10) seitlich begrenzt sind, bei der die erste und die zweite Wand (1, 2) durch einen Formschluss (7) miteinander verbunden sind, wobei Kühlkanalstege (5, 10) der ersten Wand (1) in korrespondierende Vertiefungen (6) der zweiten Wand (2) zur Ausbildung des Formschlusses (7) eingreifen,
**dadurch gekennzeichnet, dass**
im Bereich eines jeweiligen Formschlusses (7) die Vertiefungen aufweisende, zweite Wand (2) im Bereich der Kühlkanäle (11) umgeformt ist.

14. Düsenerweiterung nach Anspruch 13, **dadurch gekennzeichnet, dass** die erste und die zweite Wand (1, 2) jeweils eine rotationssymmetrische, insbesondere parabolische, Ausgangskontur aufweisen.

15. Düsenerweiterung nach Anspruch 13 oder 14, **dadurch gekennzeichnet, dass** jeder n-te Kühlkanalsteg (15) formschlüssig mit der zweiten Wand (2) verbunden ist, wobei n größer als 2 ist.

16. Düsenerweiterung nach einem der Ansprüche 12 bis 14, **dadurch gekennzeichnet, dass** ein Versteifungsring (3) vorgegebener axialer Länge in Anlage zu der zweiten Wand (2) der Düsenerweiterung gebracht ist, so dass dieser in einer Ebene liegt, die orthogonal zu einer Rotationsachse (50) der Düsenerweiterung ist.

## Claims

1. Method for producing a regeneratively cooled divergent nozzle of a rocket combustion chamber, which divergent nozzle comprises a first wall (1) and a second wall (2) which are arranged coaxially with respect to one another and between which there is formed a number of cooling ducts (11) which are delimited laterally by cooling duct webs (5, 10), wherein the first and second walls (1, 2) are connected to one another by way of a form fit (7) by virtue of cooling duct webs (5, 10) of the first wall (1) engaging into corresponding depressions (6) of the second wall (2) so as to generate the form fit (7),
**characterized in that**
the form fit (7) is produced by a deformation of the second wall (2), which has the depressions, in the region of the cooling ducts (11).

2. Method according to Claim 1, **characterized in that** a deformation of the second wall (2) takes place proceeding from a side situated opposite the first wall (1).

3. Method according to Claim 1 or 2, **characterized in that** the deformation takes place in the region of a cooling duct or simultaneously in the region of multiple cooling ducts (11).

4. Method according to Claim 3, **characterized in that**; to produce the complete divergent nozzle, the form fit (7) is generated in the region of one or more cooling ducts (11) in staggered fashion in multiple sequential method steps.

5. Method according to one of the preceding claims, **characterized in that** the force (9) required for deforming the second wall (2) is applied by way of one or more rollers (8) arranged adjacent to one another and/or one above the other.

6. Method according to one of the preceding claims, **characterized in that** positive pressure and/or negative pressure is used for the deformation of the second wall (2).

7. Method according to one of the preceding claims, **characterized in that** the first and second walls (1, 2), before the step of deformation as a whole, are positioned one above the other in an axial direction such that ends (12), which are remote from the first wall (1), of at least some of the cooling duct webs (5) project into the depressions (6).

8. Method according to one of Claims 1 to 7, **characterized in that** the deformation takes place in the region between two immediately adjacent cooling duct webs (5, 10).

9. Method according to one of Claims 1 to 7, **characterized in that** the deformation takes place in the region of one or more adjacent cooling duct webs (10) such that the second wall (2) is brought into contact with the end (15), which is remote from the first wall (1), of one or more cooling duct webs (10) without producing a form fit, wherein the form fit (7) between the first and second walls (1, 2) is realized at least by way of the cooling duct webs (5) situated in each case adjacent to said cooling duct webs (10).

10. Method according to Claim 9, **characterized in that** the deformation takes place such that every nth cooling duct web (5) is connected in form-fitting fashion to the second wall (2), wherein n is greater than 2.

11. Method according to one of the preceding claims, **characterized in that** at least one stiffening ring (3) of a predefined axial length is placed in contact with the second wall (2) of the divergent nozzle, such that said at least one stiffening ring lies in a plane orthogonal to an axis of rotation of the divergent nozzle.

12. Method according to Claim 11, **characterized in that** the at least one stiffening ring (3) has, in the region of respective deformed portions, a projection (4) matched to the shape thereof.

13. Regeneratively cooled divergent nozzle for a rocket combustion chamber, which divergent nozzle comprises a first wall (1) and a second wall (2) which are arranged coaxially with respect to one another and between which there is formed a number of cooling ducts (11) which are delimited laterally by cooling duct webs (5, 10), wherein the first and second walls (1, 2) are connected to one another by way of a form fit (7), wherein cooling duct webs (5, 10) of the first wall (1) engage into corresponding depressions (6) of the second wall (2) so as to generate the form fit (7),
**characterized in that**,
in the region of a respective form fit (7), the second wall (2), which has the depressions, is deformed in the region of the cooling ducts (11).

14. Divergent nozzle according to Claim 13, **characterized in that** the first and second walls (1, 2) each have a rotationally symmetrical, in particular parabolic, initial contour.

15. Divergent nozzle according to Claim 13 or 14, **characterized in that** every nth cooling duct web (15) is connected in form-fitting fashion to the second wall (2), wherein n is greater than 2.

16. Divergent nozzle according to one of Claims 12 to 14, **characterized in that** a stiffening ring (3) of a predefined axial length is brought into contact with the second wall (2) of the divergent nozzle, such that said stiffening ring lies in a plane orthogonal to an axis of rotation (50) of the divergent nozzle.

## Revendications

1. Procédé de fabrication d'une tuyère divergente à refroidissement régénératif d'une chambre de combustion de moteur-fusée qui comprend une première paroi (1) et une deuxième paroi (2) qui sont disposées coaxialement l'une par rapport à l'autre et entre lesquelles est réalisée une pluralité de canaux de refroidissement (11), qui sont limités latéralement par des nervures de canaux de refroidissement (5, 10), la première et la deuxième paroi (1, 2) étant connectées l'une à l'autre par un engagement positif (7) en ce que les nervures de canaux de refroidissement (5, 10) de la première paroi (1) viennent en prise dans des renfoncements correspondants (6) de la deuxième paroi (2) pour créer l'engagement positif (7),
**caractérisé en ce que**
l'engagement positif (7) est créé par formage de la deuxième paroi (2) présentant les renfoncements, dans la région des canaux de refroidissement (11).

2. Procédé selon la revendication 1, **caractérisé en ce qu'**un formage de la deuxième paroi (2) s'effectue à partir d'un côté opposé à la première paroi (1).

3. Procédé selon la revendication 1 ou 2, **caractérisé en ce que** le formage s'effectue dans la région d'un canal de refroidissement ou en même temps dans la région de plusieurs canaux de refroidissement (11).

4. Procédé selon la revendication 3, **caractérisé en ce que** pour fabriquer la tuyère divergente complète, l'engagement positif (7) est produit dans la région d'un ou de plusieurs canaux de refroidissement (11) de manière décalée dans plusieurs étapes de procédé séquentielles.

5. Procédé selon l'une quelconque des revendications précédentes, **caractérisé en ce que** la force (9) nécessaire pour le formage de la deuxième paroi (2) est appliquée par un ou plusieurs galets de roulement (8) disposés les uns à côté des autres et/ou les uns au-dessus des autres.

6. Procédé selon l'une quelconque des revendications précédentes, **caractérisé en ce que** pour le formage de la deuxième paroi (2), on utilise une surpression et/ou une dépression.

7. Procédé selon l'une quelconque des revendications précédentes, **caractérisé en ce que** la première et la deuxième paroi (1, 2) sont positionnées l'une au-dessus de l'autre en tant que tout dans la direction axiale avant l'étape de formage, de telle sorte que des extrémités (12), éloignées de la première paroi (1), d'au moins certaines des nervures de canaux de refroidissement (5) pénètrent dans les renfoncements (6).

8. Procédé selon l'une quelconque des revendications 1 à 7, **caractérisé en ce que** le formage a lieu dans la région entre deux nervures de canaux de refroidissement (5, 10) directement adjacentes.

9. Procédé selon l'une quelconque des revendications 1 à 7, **caractérisé en ce que** le formage a lieu dans la région d'une ou de plusieurs nervures de canaux de refroidissement adjacentes (10) de telle sorte que la deuxième paroi (2) soit amenée en appui contre l'extrémité (15), éloignée de la première paroi (1), d'une ou de plusieurs nervures de canaux de refroidissement (10) sans créer d'engagement positif, l'engagement positif (7) entre la première et la deuxième paroi (1, 2) se produisant au moins par les nervures de canaux de refroidissement (5) adjacentes à chaque fois à ces nervures de canaux de refroidissement (10).

10. Procédé selon la revendication 9, **caractérisé en ce que** le formage se produit de telle sorte que chaque nième nervure de canal de refroidissement (5) soit connectée par engagement positif à la deuxième paroi (2), n étant supérieur à 2.

11. Procédé selon l'une quelconque des revendications précédentes, **caractérisé en ce qu'**au moins une bague de rigidification (3) de longueur axiale prédéterminée est amenée en appui contre la deuxième paroi (2) de la tuyère divergente, de telle sorte que ladite bague se situe dans un plan perpendiculaire à un axe de rotation de la tuyère divergente.

12. Procédé selon la revendication 11, **caractérisé en ce que** l'au moins une bague de rigidification (3) présente, dans la région des formages respectifs, une saillie (4) adaptée à sa forme.

13. Tuyère divergente à refroidissement régénératif pour une chambre de combustion de moteur-fusée, qui comprend une première paroi (1) et une deuxième paroi (2) qui sont disposées coaxialement l'une par rapport à l'autre et entre lesquelles est réalisée une pluralité de canaux de refroidissement (11), qui sont limités latéralement par des nervures de canaux de refroidissement (5, 10), la première et la deuxième paroi (1, 2) étant connectées l'une à l'autre par un engagement positif (7), des nervures de canaux de refroidissement (5, 10) de la première paroi (1) venant en prise dans des renfoncements correspondants (6) de la deuxième paroi (2) pour créer l'engagement positif (7),
**caractérisée en ce que**
la deuxième paroi (2) présentant des renfoncements dans la région des canaux de refroidissement (11) est formée dans la région d'un engagement positif respectif (7).

14. Tuyère divergente selon la revendication 13, **caractérisée en ce que** la première et la deuxième paroi (1, 2) présentent à chaque fois un contour de sortie à symétrie de révolution, notamment parabolique.

15. Tuyère divergente selon la revendication 13 ou 14, **caractérisée en ce que** chaque nième nervure de canal de refroidissement (5) est connectée par engagement positif à la deuxième paroi (2), n étant supérieur à 2.

16. Tuyère divergente selon l'une quelconque des revendications 12 à 14, **caractérisée en ce qu'**une bague de rigidification (3) de longueur axiale prédéterminée est amenée en appui contre la deuxième paroi (2) de la tuyère divergente, de telle sorte que ladite bague se situe dans un plan perpendiculaire à un axe de rotation (50) de la tuyère divergente.
